# EUROPEAN PATENT APPLICATION

(11) **EP 3 135 718 A1**
(43) Date of publication of application: **01.03.2017**
(21) Application number: 16188352.5
(22) Date of filing: 09.12.2011
(51) Int. Cl.: C08J 5/24, C08L 63/00

(54) **EPOXY RESIN SYSTEM CONTAINING INSOLUBLE AND PARTIALLY SOLUBLE OR SWELLABLE TOUGHENING PARTICLES FOR USE IN PREPREG AND STRUCTURAL COMPONENT APPLICATIONS**

(30) Priority: 22.12.2010 US 201061426383 P
(62) Divisional of application: 11806038.3
(71) Applicant: CYTEC TECHNOLOGY CORP., Wilmington, Delaware 19801 (US)
(72) Inventor: GRIFFIN, James, Santa Ana, CA California 92706 (US); BONNEAU, Mark, Brea, CA California 92834 (US); EMMERSON, Gordon, Los Alamitos, CA California 90720 (US)
(74) Representative: Vande Gucht, Anne

(57) **Abstract**

Prepregs and composite articles contain resin compositions comprising an epoxy thermosetting resin; and at least two types of interlaminar toughening particles; wherein a first type of interlaminar toughening particles are insoluble in said epoxy thermosetting resin; wherein a second type of interlaminar toughening particles are partially soluble or swellable in said epoxy thermosetting resin.

## Description

### CROSS-REFERENCE TO RELATED APPLICATION

This application claims benefit of priority from U.S. Provisional Application No. 61/426,383, filed December 22, 2010, which is incorporated by reference herein in its entirety.

### BACKGROUND

### Field of the Invention

A resin system comprises a combination of a) insoluble and b) partially soluble or swellable toughening particles. A toughened pre-impregnated composite material (prepreg) comprises fibers and a resin system and may be toughened with interleaf toughening particles. Composite material using this resin system achieved good notched compression and notched tension properties while improving mode 2 fracture toughness (G_{IIC}).

### Description of the Related Art

Various types of particles and scrims have been used in composite materials to improve tensile and/or compression properties as well as toughness and environmental resistance. Particles are typically added into the resin matrix and are either soluble upon cure or do not dissolve in the resin matrix. In some cases the particles may be soluble in the uncured resin but then phase separate upon cure. This behavior is described as "Phase Separation". U.S. Patent Nos. 3,926,904 and 4,500, 660 are examples of this.

Functionalized and non-functionalized thermoplastics, such as polyethersulphones, have also been shown to improve toughness in composites without a significant reduction in hot wet performance; U.S. No: 4,656,207. Such thermoplastics often display "phase separation" type behavior as described previously.

Early interleaf toughening of composite materials was also achieved by the use of a scrim or gauze type material (Hirschbuehler et al EP0133280) as well as the use sheets of thermoplastic materials (Hirschbuehler et al 4604319). Such materials typically dissolve in to the resin and phase separate upon cure; US Pat Nos. 4,954,195; 4,957,801; 5,276,106; and 5,434,224. This showed that by concentrating the toughener between the plies of a composite, a greater increase in toughness could be obtained. Typically, the aim of the above mentioned particle or scrims is the concentration of the particles or scrim in the region between fibre layers.

Insoluble rubber particles have also been utilized as interleaf tougheners. Numerous patents have been filed by Gawin and others describing the use of of pre-formed rubber particles. US Patent Nos; 4,783,506; 4,977,215; 4977,218; 4,999,238; 5,089,560 and 6,013,730.

Insoluble thermoplastic particles have also been utilized as interleaf tougheners to avoid any decrease in hot wet performance as indicated by US. Pat Nos.4,957,801; 5,087,657; 5,242,748; 5,434, 226; 5,605,745 and 6,117,551. Such particles are typically made from milling or via a precipitation or emulsion polymerization method.

The thermoplastic particles for composite toughening and methods presently available for producing such particles require further improvement. Thermoplastic particles remaining insoluble even after curing, thereby imparting improved toughness, damage tolerance, hot wet performance, processing, micro-cracking resistance, and reduced solvent sensitivity would be a useful advance in the art and could find rapid acceptance in the large commercial transport and/or military aerospace industries, among other industries requiring composite materials to perform in demanding environments.

### SUMMARY OF THE INVENTION

To address industry demands, some embodiments are directed to a prepreg comprising reinforcing fibers and a composition comprising: a) an epoxy thermosetting resin; b) a curing agent; and c) at least two types of toughening particles, wherein a first type of toughening particles is insoluble in said epoxy thermosetting resin upon curing of the epoxy thermosetting resin; wherein a second type of toughening particles is partially soluble or swellable in said epoxy thermosetting resin upon curing of the epoxy thermosetting resin. In a preferred embodiment, the epoxy thermosetting resin is curable within the temperature range of 140°C and 200°C. Such compositions may further comprise a thermoplastic toughening agent.

The toughening particles may be each present in an amount from 0.5 to 50 % by weight of the composition, such as 1 % to 15 % by weight. The particle size distribution of the toughening particles may be about 1-75 µm.

The epoxy thermosetting resin may be a difunctional epoxy resin, for example, selected from the group consisting of diglycidyl ether of bisphenol F, diglycidyl ether of bisphenol A, diglycidyl dihydroxy naphthalene and combinations thereof. The epoxy thermosetting resin component may comprise a trifunctional meta-glycidyl amine, a trifunctional para-glycidyl amine, a tetrafunctional para-glycidyl amine, or a combination of two or more epoxy resins.

Some embodiments are directed to a composite article comprising the composition and structural fibers. The toughening particles may be present in an interleaf layer between the structural fibers. These and other embodiments are described herein.

### BRIEF DESCRIPTION OF THE DRAWINGS

Figure 1 is a schematic of a cross-sectioned composite material containing insoluble particles. In this schematic the insoluble particles are represented by spheres in the interlaminar region.
Figure 2a and 2b are schematics of swellable particles, before and after cure. The volume of the particle is observed to increase upon addition to the resin system and subsequent cure.
Figure 3a shows partially soluble particles before cure, Figure 3b and 3c are schematics of partially soluble particles after cure.

### DETAILED DESCRIPTION OF THE PREFERRED EMBODIMENT

Epoxy resin systems comprising one or more insoluble (Type A) particles with one or more swellable or partially soluble (Type B) particles impart a good balance of notched tension and compression properties and also have good fracture toughness of materials made from the epoxy resin systems. Using both Type A and Type B particles unexpectedly yielded a high G_{IIC} value and maintained a good balance of open hole tensile strength (OHT) and open hole compression strength (OHC). By using both Type A and Type B particles, composite structures made therefrom unexpectedly lack unfavorable properties on the composite material typically imparted by each material if used alone, or in comparison to conventional material. An additional benefit of the composition is the ability to tailor the properties of resulting composite structure by varying the amounts and types of particles in the epoxy resin formulation based on the users' specifications.

Generally, Type A particles impart relatively lower notched tensile properties (OHT) in a composite structure whereas Type B particles impart more favorable and relatively higher notched tensile properties (OHT). Although it is desirable to maximize the tensile strength property of the cured composite material, maximizing tensile strength can negatively affect other desirable properties, such as the compression performance and damage tolerance (and toughness) of the composite structure. These issues are overcome by using a combination of particles as described herein.

US Patent No. 7,754,322 assigned to Hexcel Corporation, is related to a matrix resin including a thermoplastic particle component that is a blend of particles that have a melting point above the curing temperature and particles that have a melting point at or below the curing temperature. By referring to the melting point, it appears that the US Patent No. 7,754,322 composition comprises crystalline polymer particles, or semicrystalline material. However, amorphous polymers appear to be recited in the application, which are characterized by their glass transition temperature (Tg), not their melting point.

Hot stage microscopy can be used to determine if a particle is Type A or Type B. First, a sample of dry particles (i.e., not combined with a resin) is measured to determine the average particle size and volume. Second, a sample of particles is dispersed in the desired matrix via mechanical shear. Third, a sample of the resulting mixture is placed on a microscope slide which is then placed in a hot stage setup under a microscope. Then, the sample is heated to the desired cure temperature and any change in size, volume or shape of the particles is observed and measured. All hot stage testing may be carried out at a particle loading of 10 wt-% of the resin matrix containing no curative or catalyst and the particle size distribution should be between about 1-75 micrometres.

The particles may have an average particle size of about 5 to 75 µm before curing of the composite; typically about 5-40 µm. In some embodiments, the particles may be substantially spherical. In some aspects, the particles are not substantially spherical but rather they are irregularly shaped due to crushing, for example by milling or cryo-grinding the particles. The particle size is typically measured using light scattering. The particle size will increase in the final and cured product if swelling takes place.

In some embodiments, insoluble Type A interlaminar toughening particles include particles subject to the above hot stage microscopy analysis wherein any change in diameter or volume of the particle is less than 5% when compared with the original "dry" particles. In some embodiments, insoluble (Type A) particles include particles that melt during the hot stage microscopy analysis but are incompatible with the resin matrix and therefore reform into discrete particles upon cooling. For analytical purposes only, the Type A particles may flow during the hot stage microscopy analysis and the degree of crystallinity may also change.

Swellable or partially soluble (Type B) interlaminar toughening particles include particles subject to the above hot stage microscopy analysis wherein the particle diameter or volume increases by more than 5%.

In some instances, if the shape of the particle is no longer maintained during the hot stage microscopy analysis, or in cases wherein the diameter and/or volume may be difficult to determine, an alternate analysis may be used. A 16 ply quasi-isotropic composite panel made from unidirectional tape and containing 10 wt-% particles of the resin matrix may be manufactured according to a cure schedule and then cross-sectioned for evaluation by microscopy. If the particle does not fully dissolve (i.e., the particle is partially soluble), the particle is a "Type B" particle. If the particle fully dissolves into both the interlaminar region and the matrix surrounding the fiber bed and is not discernable as a discrete particle upon cooling, it is not considered a Type B interlaminar toughening particle.

Determining whether the particle is "partially soluble" is a function of the time and temperature in which it is exposed to the resin. If the particle does not fully dissolve upon curing, then the particle is considered partially soluble. Of course, it is not considered an insoluble Type A interlaminar toughening particle. As used herein, "dissolves" in a resin means forming a homogeneous phase with the resin.

The Type A and Type B particles are polymers, which can be in the form of homopolymers, copolymers, block copolymers, graft copolymers, or terpolymers. The thermoplastic particles may be thermoplastic resins having single or multiple bonds selected from carbon-carbon bonds, carbon-oxygen bonds, carbon-nitrogen bonds, silicon-oxygen bonds, and carbon-sulphur bonds. One or more repeat units may be present in the polymer which incorporate the following moieties into either the main polymer backbone or to side chains pendant to the main polymer backbone: amide moieties, imide moieties, ester moieties, ether moieties, carbonate moieties, urethane moieties, thioether moieties, sulphone moieties and carbonyl moieties. The particles can also have a partially cross-linked structure. The particles may be either crystalline or amorphous or partially crystalline. By way of example, the toughening particles of type A and Type B may be composed of one or more polymers selected from the group consisting of: polyether sulfone, polyether ethersulfone, polyphenyl sulfone, polysulfone, polyimide, polyether imide, aramid, polyamide, polypthalamide, polyester, polyketone, polyetheretherketone, polyetherketoneketone, polyurethane, polyurea, polyaryletherketone, polyarylsulfide, polycarbonate, polyphenylene oxide, and blends thereof. Whether a polymer is type A or type B material depends on multiple factors, such as, whether or not it is a block-copolymer or a polymer blend, the ratio of the polymers in the blend, etc.

A combination of various Type A or Type B particles may be used in the compositions herein, such as a) one or more Type A particles, and/or b) one or more Type B particles. In some embodiments, the number of different types of Type A particles and the number of different types of Type B particles in the composition may vary, such as in accordance with the following chart:

| Number of different Type A particles | Number of different Type B particles |
|---|---|
| 1 | 1 |
| 1 | 2 |
| 1 | 3 |
| 1 | 4 |
| 2 | 1 |
| 2 | 2 |
| 2 | 3 |
| 2 | 4 |
| 3 | 1 |
| 3 | 2 |
| 3 | 3 |
| 3 | 4 |
| 4 | 1 |
| 4 | 2 |
| 4 | 3 |
| 4 | 4 |

Further, either a Type A particle or a Type B particle may comprise one or more different polymers. For example, either type A or type B particle may be made up of a mixture of thermoplastic polymers such as polyamide and polyether sulfone. In some embodiments, the Type A particles may be homologous. That is, a Type A particle may be made of one polymer, or each particle may contain more than one polymer. In the latter case, Type A particle containing more than one polymer is considered a single type of particle for purposes of determining the number of different types of particles in the chart above. The same is true for a Type B particle. In addition, the determination of whether a particle is Type A or Type B, e.g., by using hot stage microscopy in some aspects, will be determined regardless of the number of polymers in each of the particles. Thus, the different polymers in each of the particles need not be separated to make the determination as to whether particles are Type A or Type B particles. However, in some aspects, a plurality of particles may be heterologous wherein the particles may be a physical mixture of two different Type A particles, or a mixture of two different Type B particles. In this case, the particles may be analyzed separately or together to determine the type of particles.

Thus, in some instances, a "type" of particles refers to particles comprising a single polymer and/or particles comprising more than one polymer, wherein each polymer is either Type A or Type B polymers.

Type A and Type B particles independently may be in the form of spherical particles, milled particles, flakes, whiskers, short fibers, and combinations thereof.

The total level of insoluble (Type A) and soluble/partially soluble/swellable (Type B) particles may be in the range of 0.5 to 50 wt-% of the matrix. The matrix contains all of the constituents of the prepreg except the reinforcing fiber. However the preferable level of particles is 1-15 wt-% of Type A and 1-15 wt-% of Type B particles. The particles can be of a regular or irregular shape with at least one dimension between 0.1 and 75 micrometres. Such particles could include spherical particles, irregular shaped particles and short fibers. In the cured composite the particles or the residue from the particles should remain predominantly in the inter-laminar region.

### Type A Particles

In one aspect, a preferred Type A particle comprises a partially aromatic polyamide (nylon) such as polyphthalamide (PPA). Typically, nylon or polyamide particles are not soluble in epoxy resin systems.

Other Type A particles may be used. For example, insoluble thermoplastic particles were utilized as interleaf tougheners as indicated by U.S. patent Nos. 4,957,801; 5,087,657; 5,169,710; 5,268,223; 5,242,748; 5,434,226; 5,605,745; and 6,117,551. However, these insoluble particles are generally made from polymers that do not dissolve or swell in the resin compositions. These particles may be used as the "Type A" particles in the composition described in detail in accordance with aspects of the invention described herein. Particles may or may not be of a porous structure. In some embodiments, determining whether particles are Type A particles relate to the solubility in the particular resin system in which they reside.

### Type B Particles

Type B particles generally include partially soluble or swellable polymer particles, which impart good tensile strength properties on a composite structure. In some aspects, Type B particles, such as PILT101, are a cross-linked PES based particle.

A conventional approach taken to increase the toughness in the interleaf region was through the insertion of insoluble particles. Numerous patents have been filed by Gawin and others describing the insertion of pre-formed rubber particles; U.S. patent Nos. 4,783,506; 4,977,215; 4,977,218; 4,999,238; 5,089,560; and 6,013,730. These particles were again large enough so that they would be filtered away from the fiber bundles into the interleaf region. Also, though they are insoluble, they may be capable of swelling in the resin. Later technology, U.S. patent Nos. 5,266,610; and 6,063,839, used core-shell rubber particles to be used for the same purpose. Likewise, silicone based particles were also developed; U.S. patent No. 5,082,891, for toughening purposes. These particles may be used as the "Type B" particles in the composition described in detail in accordance with aspects of the invention described herein. In some embodiments, determining whether particles are Type B particles relate to the solubility and swellability in the particular resin system in which they reside.

Examples of Type B particles include the engineered cross-linked thermoplastic particles described in U.S. Patent Application Nos.: 12,787,719 (Pub. No. 2010/0304118) and 12,787,741 (Pub. No. 2010/0305239) both filed by the same assignee as the present application on May 26, 2010, which correspond to PCT/GB10/001062 and PCT/US10/36306, respectively. These applications are related to crosslinked engineered particles having an interpenetrating polymer network (IPN), in which particles are partially or totally insoluble in resin systems, and remain discrete particles after curing. However, these particles are swellable and thus can take in resin without dissolving. These particles may be used as the "Type B" particles in the composition described in detail in accordance with aspects of the invention described herein. These applications are incorporated herein by reference; however the subject matter of these applications is summarized below. Type B particles may also comprise non-covalently crosslinked thermoplastics.

The term "engineered cross-linked thermoplastic particle" as used herein may have its ordinary meaning as known to those skilled in the art and may include a plurality of polymeric chains containing a thermoplastic polymer backbone including one or more thermoplastic polymers and having one or more reactive groups, and a cross-linking agent that is chemically reactive with the reactive groups such that the cross-linking agent directly cross-links the polymer chains together via the reactive groups. The engineered cross-linked thermoplastic particle may alternatively include a plurality of polymeric chains containing a thermoplastic polymer backbone having one or more thermoplastic polymers, and a cross-linking network composed of one or more compounds that includes one or more reactive groups and a cross-linking agent that is chemically reactive with the reactive groups and capable of polymerizing the compounds via the reactive groups, thereby forming a cross-linked network or an IPN.

Another benefit of these Type B particles is the ability to achieve locally high concentration of thermoplastic in the interlaminar region without facing the risk of obtaining a phase inverted system. The thermoplastic content in the interlaminar region is known to increase the toughness of the material. However, when large quantities of linear compatible thermoplastic are blended with or dissolved into a thermosetting resin, the thermoplastic is known to phase separate in an inverted manner during the cure of the resin, also known as reaction induced phase separation, leading to a thermoplastic continuous phase with inclusions of thermosetting polymer. This phase inversion, in turn, is severely detrimental to the properties of the composite, primarily for temperature resistance and solvent resistance. Embodiments of the engineered cross-linked thermoplastic particles do not cause phase inversion. High thermoplastic content may be achieved, therefore, without compromising the temperature or solvent resistance of the material.

In other embodiments, Type B particles include "layered particles" such as, but not limited to, core-shell structures where the swell ability of each layer is independently controlled through the manufacturing of the particles. In some embodiments, each layer may swell to a different extent in comparison to a neighboring layer.

Composite materials incorporating the engineered cross-linked thermoplastic particles have improved mechanical properties such as compression after impact (CAI) or (CSAI) fracture toughness or delamination resistance in mode I and II (G_{IC} and G_{IIC} respectively) OHC (Open Hole Compression). CAI (or CSAI) measures the ability of a laminate/composite material to tolerate damage. According, to this method, the laminate to be tested is subject to an impact of a given energy prior to be loaded in compression. The laminate is constrained during the test to ensure that no elastic instability is taking place. The strength of the laminate is recorded. The benefit of interlaminar toughening particles is primarily noticed in the properties of the material that involve fracture, such as CAI, G_{IC} and G_{IIC}, K_{IC} and K_{IIC}. The properties of K_{c} and G_{c} represent the fracture toughness, which is a property that describes the ability of a material containing a crack to resist fracture. K is a representation of the stress intensity factor whilst G is the fracture energy. K_{IC} can be measured following the ISO standard "Plastics -- Determination of fracture toughness (G_{IC} and K_{IC}) -- Linear elastic fracture mechanics (LEFM) approach (ISO 13586:2000)" or by following the procedure recommended by the ESIS committee, "Fracture Mechanics Testing Methods for Polymers Adhesives and Composites," D.R. Moore, A. Pavan, J.G. Williams, ESIS publication 28, 2001, pp11-26.

In addition, the concept of preformed particle toughening can be exploited in other areas where toughening is required, this includes but is not limited to adhesive formulations, primary and secondary structure thermosetting formulation.

### Methods of Manufacturing

The methods of manufacturing the particles described herein can further include, in any order emulsification, precipitation, emulsion polymerization, washing, drying, extrusion, milling, grinding, cryo-grinding, jet-milling and/or sieving the particles. Those of skill in the art will appreciate that these steps can be achieved by any of numerous methods known in the art and/or performed using only routine experimentation.

### Epoxy Resin

The terms "matrix," "resin," and "matrix resin" as used herein have their ordinary meaning as known to those skilled in the art and may include one or more compounds comprising thermosetting materials. Type A and Type B particles may be combined with the epoxy thermosetting resins, which are useful in making composite materials. In some instances, a matrix generally refers to a combination of the epoxy resin, the particles and the curing agent, that may also include a soluble thermoplastic toughening agent.

The term "epoxy thermosetting resin" as used herein may have its ordinary meaning as known to those skilled in the art and include epoxy resins and combinations of epoxy resins, and precursors thereof.

Epoxy resins may include difunctional epoxy resins, that is, epoxy resins having two epoxy functional groups. The difunctional epoxy resin may be saturated, unsaturated, cycloaliphatic, alicyclic or heterocyclic.

Difunctional epoxy resins, by way of example, include those based on: diglycidyl ether of Bisphenol F, Bisphenol A (optionally brominated), glycidyl ethers of phenol-aldelyde adducts, glycidyl ethers of aliphatic diols, diglycidyl ether, diethylene glycol diglycidyl ether, aromatic epoxy resins, epoxidised olefins, brominated resins, aromatic glycidyl amines, heterocyclic glycidyl imidines and amides, glycidyl ethers, fluorinated epoxy resins, or any combination thereof. Examples of suitable difunctional epoxy resins include those sold under the trademarks Epikote and Epon, A difunctional epoxy resin may be used alone or in any suitable combination with other difunctional or multifunctional epoxies.

Epoxy resins may include multifunctional epoxies, such as those having at least one meta-substituted phenyl ring in its backbone, which may be trifunctional, tetrafunctional, or a combination thereof. In some embodiments the multifunctional epoxy resins may be saturated, unsaturated, cylcoaliphatic, alicyclic or heterocyclic.

Suitable multifunctional epoxy resins, by way of example, include those based upon: phenol and cresol epoxy novolacs, glycidyl ethers of phenolaldelyde adducts; glycidyl ethers of dialiphatic diols; diglycidyl ether; diethylene glycol diglycidyl ether; aromatic epoxy resins; dialiphatic triglycidyl ethers, aliphatic polyglycidyl ethers; epoxidised olefins; brominated resins; aromatic glycidyl amines; heterocyclic glycidyl imidines and amides; glycidyl ethers; fluorinated epoxy resins or any combination thereof

A trifunctional epoxy resin will be understood as having the three epoxy groups substituted either directly or indirectly in a para or meta orientation on the phenyl ring in the backbone of the compound. A tetrafunctional epoxy resin will be understood as having the four epoxy groups substituted either directly or indirectly in a meta or para orientation on the phenyl ring in the backbone of the compound.

It is also envisaged that the phenyl ring may additionally be substituted with other suitable non-epoxy substituent groups. Suitable substituent groups, by way of example, include hydrogen, hydroxyl, alkyl, alkenyl, alkynyl, alkoxyl, aryl, aryloxyl, aralkyloxyl, aralkyl, halo, nitro, or cyano radicals. Suitable non-epoxy substituent groups may be bonded to the phenyl ring at the para or ortho positions, or bonded at a meta position not occupied by an epoxy group. Suitable tetrafunctional epoxy resins include N,N,N',N'-tetraglycidyl-m-xylenediamine (available commercially from Mitsubishi Gas Chemical Company (Chiyoda-Ku, Tokyo, Japan) under the name Tetrad-X), and Erisys GA-240 (from CVC Chemicals, Morrestown, N.J.). Suitable trifunctional epoxy resins, by way of example, include those based upon: phenol and cresol epoxy novolacs; glycidyl ethers of phenolaldelyde adducts; aromatic epoxy resins; dialiphatic triglycidyl ethers; aliphatic polyglycidyl ethers; epoxidised olefins; brominated resins, aromatic glycidyl amines and glycidyl ethers; heterocyclic glycidyl imidines and amides; glycidyl ethers; fluorinated epoxy resins or any combination thereof.

A trifunctional epoxy resin may be triglycidyl meta-aminophenol. Triglycidyl meta-aminophenol is available commercially from Huntsman Advanced Materials (Monthey, Switzerland) under the trade name Araldite MY0600, and from Sumitomo Chemical Co. (Osaka, Japan) under the trade name ELM-120.

Additional examples of suitable multifunctional epoxy resin include, by way of example, N,N,N',N'-tetraglycidyl-4,4'-diaminodiphenyl methane (TGDDM available commercially as Araldite MY720 and MY721 from Huntsman Advanced Materials (Monthey, Switzerland), or ELM 434 from Sumitomo), triglycidyl ether of para aminophenol (available commercially as Araldite MY 0500 or MY 0510 from Huntsman Advanced Materials), dicyclopentadiene based epoxy resins such as Tactix 556 (available commercially from Huntsman Advanced Materials), tris-(hydroxyl phenyl), and methane-based epoxy resin such as Tactix 742 (available commercially from Huntsman Advanced Materials). Other suitable multifunctional epoxy resins include DEN 438 (from Dow Chemicals, Midland, Mich.), DEN 439 (from Dow Chemicals), Araldite ECN 1273 (from Huntsman Advanced Materials), and Araldite ECN 1299 (from Huntsman Advanced Materials)

The epoxy resin is present in the range 1 wt % to 99 wt % of the matrix resin. Preferably, the epoxy resin is present in the range 10 wt % to 70 wt %. More preferably, the epoxy resin is present in the range 25 wt % to 60 wt %.

In some embodiments, the epoxy thermosetting resin is capable of causing the Type B particles to swell. In some embodiments, the epoxy thermosetting resin is incapable of substantially dissolving the Type A particles. "Substantially dissolving" or "substantially soluble" includes forming a substantially homogeneous combination.

The terms "cure" and "curing" as used herein have their ordinary meaning as known to those skilled in the art and may include polymerizing and/or cross-linking processes. Curing may be performed by processes that include, but are not limited to, heating, exposure to ultraviolet light, electron beam, and exposure to radiation. Prior to curing, the matrix may further comprise one or more compounds that are, at about room temperature, liquid, semi-solid, crystalline solids, and combinations thereof. In further embodiments, the matrix within the prepreg may be partially cured in order to exhibit a selected stickiness or tack and/or flow properties.

In some embodiments, the resin cures in the particle, for example if the particle swells in the resin (i.e., if it is a Type B particle).

### Structural Composites and Structural Composite Articles

In some embodiments, pre-impregnated composite material (prepreg) comprises reinforcing fibers, a epoxy resin matrix, a thermoplastic toughening agent and one or more polymeric interleaf toughening particles in such a prepreg that is insoluble (Type A) in the epoxy resin matrix and 1 or more polymeric interleaf toughening particles that is partially soluble or swellable (Type B) in the resin matrix. In some embodiments, the cured composite the particles remain predominantly in the interlaminar region. A composite material with such an interlaminar region has a good balance in notched compression and notched tension properties while maintaining mode 2 fracture toughness.

The term "prepreg" as used herein has its ordinary meaning as known to those skilled in the art and thus includes sheets or lamina of fibers that have been impregnated with a matrix material within at least a portion of their volume. The matrix may be present in a partially cured state. Typically a prepreg is in a form that is ready for molding and curing into the final composite part and is commonly used in manufacturing load-bearing structural parts and particularly aerospace composite parts, such as wings, fuselages, bulkheads and control surfaces.

The term "fiber" as used herein has its ordinary meaning as known to those skilled in the art and may include one or more fibrous materials adapted for the reinforcement of composites. Fibers may take the form of any of particles, flakes, whiskers, short fibers, continuous fibers, sheets, plies, and combinations thereof. Continuous fibers may further adopt any of unidirectional, multi-dimensional (e.g. two-or three-dimensional), non-woven, woven, knitted, stitched, wound, and braided configurations, as well as swirl mat, felt mat, and chopped mat structures. Woven fiber structures may comprise a plurality of woven tows having less than about 1000 filaments, less than about 3000 filaments, less than about 6000 filaments, less than about 12000 filaments, less than about 24000 filaments, less than about 48000 filaments, less than about 56000 filaments, less than about 125000 filaments, and greater than about 125000 filaments. In further embodiments, the tows may be held in position by cross-tow stitches, weft-insertion knitting stitches, or a small amount of resin, such as a sizing.

The composition of the fibers may be varied, as necessary. Embodiments of the fiber composition may include, but are not limited to, glass, carbon, aramid, quartz, basalt, polyethylene, polyester, poly-p-phenylene-benzobisoxazole (PBO), boron, silicon carbide, polyamide, and graphite, and combinations thereof. In one embodiment, the fiber is carbon, fiberglass, aramid or other thermoplastic materials. The reinforcing fibers may be organic or inorganic. Further, the fibers may include textile architectures including those that are either continuous or non-continuous in form. In some preferred aspects, the fibers are glass, carbon or aramid fibers.

The term "interleaf" as used herein has its ordinary meaning as known to those skilled in the art and includes a layer placed between other layers. In one embodiment, the interleaf may be positioned in the middle of a plane of a composite. For example, the interleaf is commonly found between layers of structural fibers.

"Interlaminar" as used herein in the phrase "interlaminar toughening particles" has its ordinary meaning as known to those skilled in the art and in some embodiments includes the intended use of the particles in a layer placed between other layers, such as between structural fibers, to impart a toughening effect on the cured composite material.

The term "layup" as used herein has its ordinary meaning as known to those skilled in the art and may include one or more prepregs that are placed adjacent one another. In certain embodiments, the prepregs within the layup may be positioned in a selected orientation with respect to one another. In a further embodiment, the prepregs may optionally be stitched together with a threading material in order to inhibit their relative motion from a selected orientation. In additional embodiments, "layups" may comprise any combination of fully impregnated prepregs, partially impregnated prepregs, and perforated prepregs as discussed herein. Layups may be manufactured by techniques that may include, but are not limited to, hand layup, automated tape layup (ATL), advanced fiber placement (AFP), and filament winding. The layups can then be cured, such as by autoclave, to form a composite article, wherein the toughening particles are localized in the interleaf and provide increased toughness and damage tolerance of the composite article due to the particles remaining discrete particles even after the curing process.

The terms "approximately," "about," and "substantially" as used herein represent an amount close to the stated amount that still performs the desired function or achieves the desired result. For example, the terms "approximately," "about," and "substantially" may refer to an amount that is within less than 10% of, within less than 5% of, within less than 1% of, within less than 0.1 % of, and within less than 0.01 % of the stated amount.

The term "at least a portion of" as used herein represents an amount of a whole that comprises an amount of the whole that may include the whole. For example, the term "a portion of" may refer to an amount that is greater than 0.01 % of, greater than 0.1 % of, greater than 1% of, greater than 10% of, greater than 20% of, greater than 30% of, greater than 40% of, greater than 50% of, greater than 60%, greater than 70% of, greater than 80% of, greater than 90% of, greater than 95% of, greater than 99% of, and 100% of the whole.

### EXAMPLES

The following examples are provided to assist one skilled in the art to further understand certain embodiments of the present invention. These examples are intended for illustration purposes only and are not to be construed as limiting the scope of the claims of the present invention. Methods of making various embodiments of the resin and particle combination according to the invention are exemplified below.

### Example 1

Table 1 shows the composition of a typical matrix with all proportions given as percentages by weight. The matrix was prepared by dispersing 5003P in the epoxy constituents and heating to 125°C for approximately 1 hour to dissolve the 5003P. The resulting mixture was cooled to 82°C and the remaining constituent were added and mixed thoroughly. The resulting matrix resin was then filmed via a hot melt process. A 190 grams per square metre (gsm) fibre aereal weight prepreg with 35 wt-% resin matrix content was manufactured by the application of said films to reinforcing unidirectional carbon fibers.

The particles used were varied and are described in table number 2 along with the resulting mechanical data. The polyphthalamide (PPA) particle is a Type A particle. PILT 101 is a type B particle and has been described in U.S. Patent Application Nos.: 12,787,719 and 12,787,74. The polyimide particle is a Type B particle.

**Table 1: Formulation 1**

| **Material** | **wt-%** |
|---|---|
| PY 306 (Bis-F epoxy) | 24.067 |
| MY 0510 (trifunctional epoxy) | 24.067 |
| 4,4' Diaminodiphenylsulphone | 24.371 |
| 5003P (Polyethersulphone) | 17.496 |
| Particles | 10.00 |
| ***total*** | ***100*** |

**Table 2: Mechanical property data of composites comprising of Formulation 1 with various particles and combinations of particles**

| Run number | Run 1-1 | Run 1-2 | Run 1-3 | Run 1-4 | Run 1-5 |
|---|---|---|---|---|---|
| Particles | 10 wt-% polyphthalamide particles | 10 wt-% PILT101 | 10 wt-% polyimide particles | 5 wt-% polyphthalamide particles & 5 wt-% PILT101 | 5 wt-% polyphthalamide particle & 5 wt-% Polyimide particle |
| Particle Type | A | B | B | A & B | A & B |
| Giic | 9.1 | 9 | 6.9 | 10.4 | 11.3 |
| Open hole compression (OHC) dry | 48.5 | 43.8 | 43.7 | 45 | 45.8 |
| Open hole compression (OHC) H/W | 37.3 | 38.1 | 35.9 | 37 | 37 |
| Open hole tension (OHT) | 80.5 | 94.5 | 91 | 84.4 | 37.4 |

As demonstrated in run number 1-4 and 1-5, an epoxy resin systems comprising one or more insoluble (Type A) particles with one or more swellable or partially soluble (Type B) particles impart a good balance of notched tension and compression properties and also have good fracture toughness of materials made from the epoxy resin systems. Using both Type A and Type B particles unexpectedly yielded a high G_{IIC} value and maintained a good balance of open hole tensile strength (OHT) and open hole compression strength (OHC).

Various patent and/or scientific literature references have been referred to throughout this application. The disclosures of these publications in their entireties are hereby incorporated by reference as if written herein to the extent that such disclosures are not inconsistent with the invention and for all jurisdictions in which such incorporation by reference is permitted. In view of the above description and the examples, one of ordinary skill in the art will be able to practice the disclosure as claimed without undue experimentation.

Although the foregoing description has shown, described, and pointed out the fundamental novel features of the present teachings, it will be understood that various omissions, substitutions, and changes in the form of the detail of the apparatus as illustrated, as well as the uses thereof, may be made by those skilled in the art, without departing from the scope of the present teachings. Consequently, the scope of the present teachings should not be limited to the foregoing discussion.

## Claims

1. A prepreg comprising of:
A) reinforcing fibers; and
B) a composition comprising:
i) an epoxy thermosetting resin;
ii) a curing agent; and
iii) at least two types of polymeric toughening particles, wherein a first type of toughening particles are partially aromatic polyamide particles, and a second type of polymeric toughening particles are engineered cross-linked thermoplastic particles.

2. The prepreg according to claim 1, wherein the amount of the first type of toughening particles is from 1 % to 15 % by weight; and/or the amount of the second type of toughening particles is from 1 % to 15 % by weight, wherein the % amount is calculated with respect to the constituents of the prepreg except the reinforcing fibers.

3. The prepreg according to claim 1 wherein said polymeric toughening particles have an average particle size of 5 to 75 µm as measured by light scattering.

4. The prepreg according to claim 1 wherein the epoxy thermosetting resin is a difunctional epoxy resin selected from the group consisting of diglycidyl ether of bisphenol F, diglycidyl ether of bisphenol A, and diglycidyl dihydroxy naphthalene.

5. The prepreg according to claim 1 wherein the epoxy thermosetting resin is a trifunctional meta-glycidyl amine.

6. The prepreg according to claim 1 wherein the epoxy thermosetting resin is a trifunctional para-glycidyl amine.

7. The prepreg according to claim 1 wherein the epoxy thermosetting resin is a tetrafunctional para-glycidyl amine.

8. The prepreg according to claim 1 wherein the composition comprises a-combination of two or more epoxy thermosetting resins.

9. The prepreg according to claim 1 wherein each engineered cross-linked thermoplastic particle comprises an inter-penetrating polymer network, which comprises: a) a plurality of polymeric chains having a thermoplastic polymer backbone, said polymer backbone comprised of one or more thermoplastic polymers; and b) a cross-linking network formed by polymerizing one or more compounds having one or more reactive groups using a cross-linking agent that is chemically reactive with the reactive groups.

10. The prepreg according to claim 1 wherein each engineered cross-linked thermoplastic particle comprises a plurality of polymeric chains having a thermoplastic polymer backbone, said polymer backbone comprising one or more thermoplastic polymers and having one or more reactive groups, and the polymer chains being cross-linked together via the reactive groups by a cross-linking agent that is chemically reactive with the reactive groups.

11. A composite article comprising:
- a composition comprising:
i) an epoxy thermosetting resin;
ii) a curing agent; and
iii) at least two types of polymeric toughening particles, wherein a first type of toughening particles are partially aromatic polyamide particles, and a second type of polymeric toughening particles are engineered cross-linked thermoplastic particles; and
- layers of structural fibers,
wherein said first type of toughening particles and said second type of toughening particles are in an interleaf layer between the layers of structural fibers.

12. The composite article according to claim 11, wherein said engineered cross-linked thermoplastic particles comprise an inter-penetrating polymer network, which comprises: a) a plurality of polymeric chains having a thermoplastic polymer backbone, said polymer backbone comprised of one or more thermoplastic polymers; and b) a cross-linking network formed by polymerizing one or more compounds having one or more reactive groups using a cross-linking agent that is chemically reactive with the reactive groups.

13. The composite article according to claim 11, wherein said engineered cross-linked thermoplastic particles comprise a plurality of polymeric chains having a thermoplastic polymer backbone, said polymer backbone comprising one or more thermoplastic polymers and having one or more reactive groups, and the polymer chains being cross-linked together via the reactive groups by a cross-linking agent that is chemically reactive with the reactive groups.

14. A process for manufacturing a composite article comprising placing one or more prepregs of anyone of claims 1 to 10 adjacent one another and curing.
